# EUROPEAN PATENT SPECIFICATION

(11) **EP 3 312 538 B1**
(45) Date of publication and mention of the grant of the patent: **12.02.2020**
(21) Application number: 17197482.7
(22) Date of filing: 20.10.2017
(51) Int. Cl.: F28D 1/053, F28D 1/047, F28F 1/26, B23P 15/26, B33Y 10/00, F28F 3/08, F28F 1/12, B33Y 80/00, F28F 1/00, B21D 53/06, F28F 1/28, B33Y 50/02

(54) **TUBE-FIN HEAT EXCHANGER**
RIPPENROHRWÄRMETAUSCHER
ÉCHANGEUR THERMIQUE À AILETTES-TUBES

(30) Priority: 20.10.2016 US 201615298774
(43) Date of publication of application: 25.04.2018
(73) Proprietor: Hamilton Sundstrand Corporation, Charlotte, NC 28217-4578 (US)
(72) Inventor: TURNEY, Joseph, Amston, CT Connecticut 06321 (US); YUN, Thomas M., Glastonbury, CT Connecticut 06033 (US)
(74) Representative: Dehns

(56) References cited:
- EP-A1- 3 062 055
- WO-A1-2013/163398
- WO-A1-2015/042089
- JP-A- S6 210 596

## Description

### BACKGROUND OF THE DISCLOSURE

The subject matter disclosed herein relates to tube-fin heat exchangers and, more particularly, to additively manufactured tube-fin heat exchangers.

Heat exchangers are central to the functionality of numerous systems including, but not limited to, engines and environmental control systems (ECSs). When heat exchangers are deployed in engines, for example, such heat exchangers can be used for a variety of oil and air cooling applications. They can fulfill similar operational requirements in ECSs.

Recently, applications of heat exchangers for deployment in engines and ECSs has continually required that they be designed to provide for increased heat transfer performance as well as decreased pressure losses, size and weight. Thus, current heat exchanger configurations are often dominated by plate-fin constructions with tube-shell and plate-type heat exchangers having only niche applications.

Traditional plate-fin construction of heat exchangers tends to impose multiple design constraints. Such design constraints lead to inhibited performance as well as increases in size and weight. Plate-fin heat exchangers that are constructed traditionally also suffer structural reliability issues and can be unable to meet future high temperature applications which could limit system integration opportunities. A heat exchanger according to the preamble of claim 1 is disclosed in document EP 3 062 055 A1.

### BRIEF DESCRIPTION OF THE DISCLOSURE

According to one aspect of the disclosure, an additively manufactured finned-tube heat exchanger is provided as defined in claim 1, including only a single part. The single part includes one or more tubular elements having tubular widths of less than 2.54 mm (0.1") and being configured to define one or more first flow paths for a first fluid and two or more fins through which the one or more tubular elements extend. The two or more fins are arranged to define second flow paths over and around the one or more tubular elements for a second fluid.

In accordance with the invention, the one or more tubular elements of the single part include a plurality of tubular elements and the two or more fins of the single part include a plurality of fins through which each tubular element of the plurality of tubular elements extends.

In accordance with the invention, the single part further includes tube-tube connecting fins.

In accordance with additional or alternative embodiments, the tubular elements of the plurality of tubular elements are curved and the fins of the plurality of the fins are parallel with one another or oriented radially with varying lengths.

In accordance with additional or alternative embodiments, the tubular elements of the plurality of tubular elements have varied cross-sectional shapes.

In accordance with additional or alternative embodiments, at least one of the tubular elements of the plurality of tubular elements is wavy and at least one of the fins of the plurality of fins is wavy.

In accordance with additional or alternative embodiments, the fins of the plurality of fins are intermittent.

In accordance with additional or alternative embodiments, the fins crisscross with each other.

In accordance with additional or alternative embodiments, the single part includes regions of variable tubular element or fin densities and regions of variable tubular element or fin wall thicknesses.

In accordance with additional or alternative embodiments, redistribution tubular elements are provided by which at least two tubular elements of the plurality of tubular elements are fluidly communicative.

According to another aspect of the disclosure, a method of additively manufacturing a finned-tube heat exchanger in only a single part. The method includes building-up tubular elements along longitudinal axes thereof, the tubular elements having tubular widths of less than 2.54 mm (0.1") and being configured to define first flow paths for a first fluid, determining whether predefined heights of built-up tubular elements are reached and building-up fins outwardly from the tubular elements upon identifying that the predefined heights are reached from results of the determining.

In accordance with additional or alternative embodiments, the building-up includes direct metal laser sintering (DMLS).

In accordance with additional or alternative embodiments, the method further includes building-up tube-tube connecting fins.

In accordance with additional or alternative embodiments, the building-up of the tubular elements includes varying tubular element shapes.

In accordance with additional or alternative embodiments, the building-up of the tubular elements includes forming tubular element waves along the longitudinal axes and the building-up of the fins includes forming fin waves transverse with respect to the longitudinal axes.

In accordance with additional or alternative embodiments, the building-up of the fins comprises forming the fins intermittently.

In accordance with additional or alternative embodiments, the building-up of the fins comprises temporarily supporting the fins.

In accordance with additional or alternative embodiments, the building-up of the tubular elements and the fins includes forming regions of variable tubular element or fin densities and forming regions of variable tubular element or fin wall thicknesses.

In accordance with additional or alternative embodiments, the method further includes building-up redistribution tubular elements between at least two of the tubular elements.

According to yet another aspect not within the scope of the invention, a system disposed for manipulating a data file that is usable in additive manufacturing of a finned-tube heat exchanger in only a single part is provided. The system includes a network, computing resources configured to copy and store the data file and to transmit the data file along the network and a printing device. The data file includes executable instructions for controlling the printing device to execute a method. The method includes building-up tubular elements along longitudinal axes thereof, the tubular elements having tubular widths of less than 2.54 mm (0.1") and defining first flow paths for a first fluid, determining whether predefined heights of built-up tubular elements are reached and building-up fins outwardly from the tubular elements upon identifying that the predefined heights are reached from results of the determining. The building-up of the fins includes arranging the fins to define second flow paths over and around the tubular elements for a second fluid.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a finned-tube heat exchanger in accordance with embodiments;
FIG. 2 is a cross-sectional view of a tubular element of the finned-tube heat exchanger of FIG. 1 in accordance with embodiments;
FIG. 3 is a cross-sectional view of a tubular element of the finned-tube heat exchanger of FIG. 1 in accordance with alternative embodiments;
FIG. 4 is an enlarged top-down view of curved tubes and parallel fins of a finned-tube heat exchanger in accordance with embodiments;
FIG. 5 is an enlarged top-down view of curved tubes and radial fins of varying lengths of a finned-tube heat exchanger in accordance with embodiments;
FIG. 6 is an enlarged end view of tube-tube connector fins of the finned-tube heat exchanger of FIG. 1 in accordance with the invention;
FIG. 7 is an enlarged end view of tube-tube connector fins of the finned-tube heat exchanger of FIG. 1 shown by way of background only;
FIG. 8 is an enlarged schematic view of a wavy tubular element in accordance with embodiments;
FIG. 9 is an enlarged schematic view of a wavy fin in accordance with embodiments;
FIG. 10 is an enlarged schematic view of an intermittent fin in accordance with embodiments;
FIG. 11 is an enlarged schematic view of an intermittent fin in accordance with embodiments;
FIG. 12 is a top-down view of a finned-tube heat exchanger with fins transversely oriented relative to tubes in accordance with embodiments;
FIG. 13 is a top-down view of a finned-tube heat exchanger with cross-crossing fins transversely oriented relative to tubes in accordance with embodiments;
FIG. 14 is an enlarged schematic side view of a sacrificial fin support element disposed to support a horizontal fin during assembly processes in accordance with embodiments;
FIG. 15 is a top-down view of a finned-tube heat exchanger with variable tubular densities and wall thicknesses in accordance with embodiments;
FIG. 16 is a top-down view of a finned-tube heat exchanger with redistribution tube in accordance with embodiments;
FIG. 17 is a schematic diagram illustrating an additive manufacturing method of forming a finned-tube heat exchanger in accordance with embodiments;
FIG. 18 is a schematic diagram illustrating an additional operation in an additive manufacturing method of forming a finned-tube heat exchanger in accordance with embodiments; and
FIG. 19 is a schematic diagram of a system for manipulating a data file usable in the additive manufacturing of a fined-tube heat exchanger in accordance with embodiments.

The detailed description explains embodiments of the disclosure, together with advantages and features, by way of example with reference to the drawings.

### DETAILED DESCRIPTION OF THE DISCLOSURE

As will be described below, a finned-tube heat exchanger is provided that takes advantage of the capabilities of additive manufacturing in order to overcome some of the limitations of traditional fabrication methods for plate-fin and other types of heat exchangers. Finned-tube heat exchangers are commonplace (i.e., a typical car radiator is an example of a finned-tube heat exchanger) and are often used to transmit heat from a liquid that is contained inside tubes to a gas that is directed to flow over the tubes. Finned-tube heat exchangers can be utilized in compact, high effectiveness applications and particularly those where heat transfer is required between two gasses. While the performance capabilities of conventional finned-tube heat exchangers in such cases can be limited by minimum tube diameters that can be reliably manufactured using standard processes (typically, the fins are braised or welded onto the tubes which have minimum tube diameters of over 9.525 mm (3/8")), the following description provides for a finned-tube exchanger that has tube diameters that are reduced by up to an order of magnitude as compared to those found in conventional designs. The resulting finned-tube heat exchanger can compete in terms of performance capabilities with compact plate-fin designs.

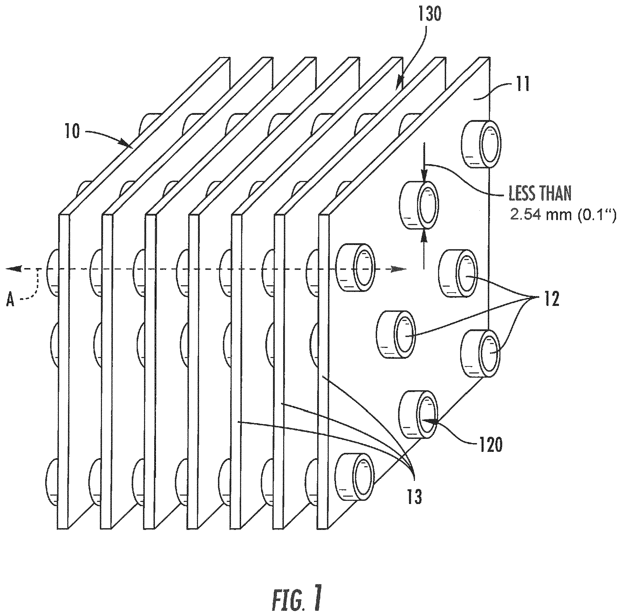

With reference to FIGS. 1-5, an additively manufactured finned-tube heat exchanger 10 is provided and includes only a single part 11. The single part 11 is formed by way of any suitable additive manufacturing processes such as, but not limited to, direct metal laser sintering (DMLS) and thus has no braze joints or weld joints. As a result of being formed by way of additive manufacturing methods, the single part 11 has certain dimensions and features that cannot be provided on finned-tube heat exchangers that are formed by way of conventional processes (e.g., casting or machining).

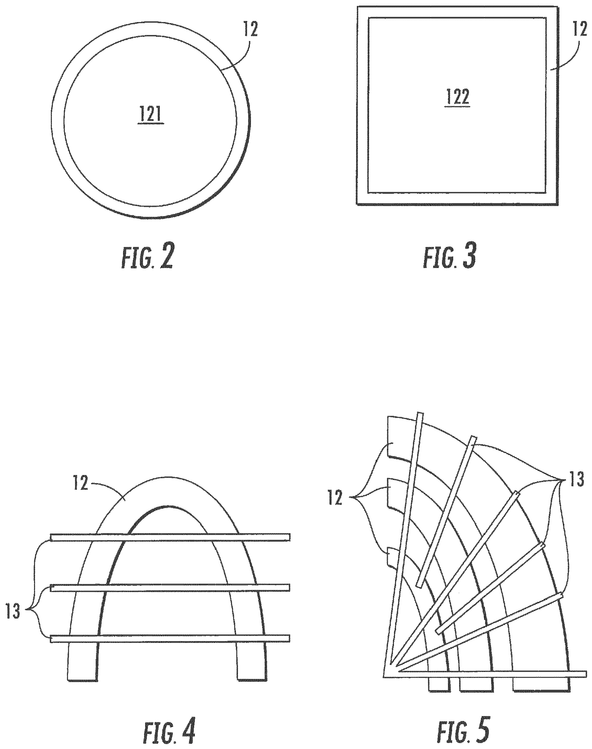

As shown in FIG. 1, the single part 11 includes one or more tubular elements 12 and two or more fins 13. The one or more tubular elements 12 have tubular widths of less than 2.54 mm (0.1") and are configured to define one or more first flow paths 120 for a first fluid. As shown in FIGS. 2 and 3, the one or more tubular elements 12 can have circular cross-sectional shapes 121 or annular cross-sectional shapes (see FIG. 2) but this is not required as the tubular elements 12 can have other non-circular cross-sectional shapes 122 (see FIG. 3) as well. In any case, the tubular widths of less than 2.54 mm (0.1") (i.e., tubular diameters of less than 2.54 mm (0.1") in the case of the tubular elements 12 having the circular cross-sectional shapes 121 for example) are not achievable using conventional assembly or formation processes but are achievable using additive manufacturing methods. The one or more tubular elements 12 extend through the two more fins 13. The two or more fins 13 are arranged to define second flow paths 130 that extend over and around the one or more tubular elements 12 for a second fluid.

In some cases, the tubular elements 12 can have varying tubular widths and in some other cases, the tubular elements 12 and the fins 13 can have varying tubular element and fin wall thicknesses. Such features permit varying tubular element 12/fin 13 densities in regions with particularly high or low thermal stresses. Such varying densities and wall thicknesses can mitigate the impact of relatively large differences between hot and cold fluid temperatures (i.e., the impact of varying thermal expansion rates).

In the exemplary case of FIG. 1, the one or more tubular elements 12 are provided as a plurality of tubular elements 12 and the one or more fins 13 are provided as a plurality of fins 13. The tubular elements 12 extend in generally similar directions in staggered or row-column formations (see FIGS. 4 and 5) and can be substantially parallel with one another. The tubular elements 12 can extend individually from an input plenum to an outlet plenum such that a plurality of first flow paths is provided.

In accordance with further or alternative embodiments and, as shown in FIGS. 4 and 5, the tubular elements 12 may be provided as hairpin or 180° curved elements 401 (see FIG. 4) or as partially curved elements 501 (see FIG. 5) with varying or similar tubular widths, diameters and radii of curvatures. In either or both cases, the curved elements 401 and the partially curved elements 501 can be employed as standalone tubular elements 12 or can be used to connect complementary ends of the tubular elements 12 to one another. In any case, one or more first flow paths may be provided by the resulting sets of linked tubular elements 12. The fins 13 may be arranged to be substantially parallel with one another as shown in FIG. 4 or may be arranged in radial formations 502 with varying lengths as shown in FIG. 5. In each case, the fins 13 and are oriented substantially transversely relative to longitudinal axes A of the tubular elements 12 as shown in FIGS. 1, 4 and 5.

When the single part 11 is in use, the first fluid flows through the tubular elements 12 and the second fluid flows between adjacent fins 13. In so doing, heat transfer occurs between the first and second fluids via the material of the tubular elements 12 and the material of the fins 13. Thus, the respective materials of the tubular elements 12 and the fins 13 can be efficiently thermally conductive.

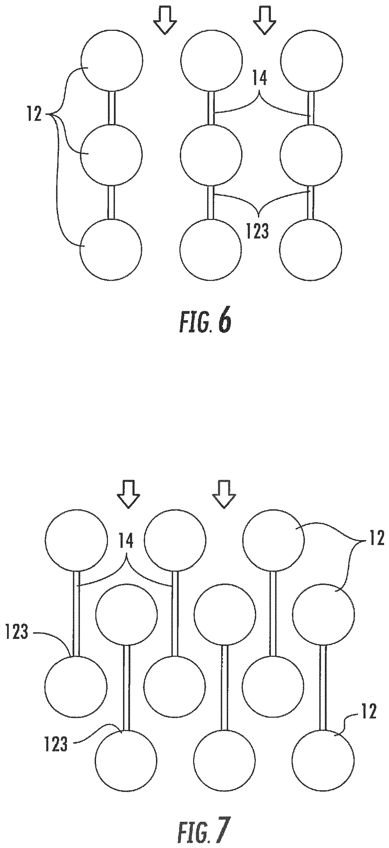

With reference to FIGS. 6-16, further embodiments of the single part 11 will now be described. While the various embodiments are presented alone, it is to be understood that they may be presented with some or all of one another in various combinations and permutations within the scope of the claims.

As shown in FIGS. 6 and 7, the single part 11 includes tube-tube connecting fins 14. The tube-tube connecting fins 14 are present in the row-column formations of the tubular elements 12 (see FIG. 6). The staggered formations of the tubular elements 12 (see FIG. 7) are shown by way of background only. In any case, the tube-tube connecting fins 14 extend between complementary exterior surfaces 123 of adjacent tubular elements 12.

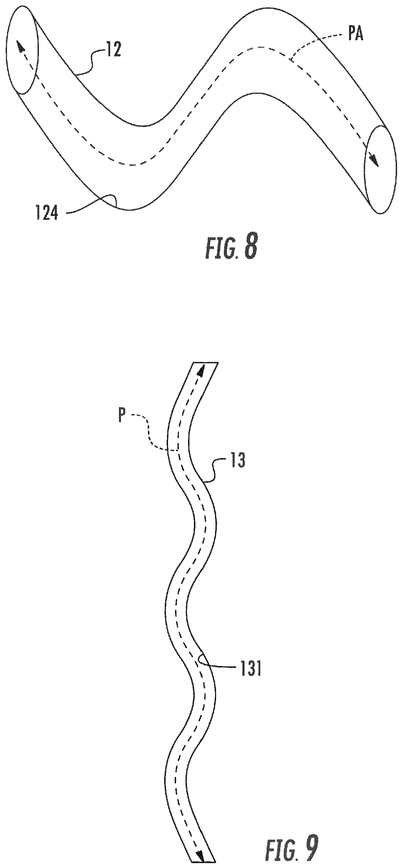

As shown in FIGS. 8 and 9, at least one or more of either or both of the tubular elements 12 and the fins 13 can be formed to be wavy. For the tubular elements 12, such waviness 124 runs along the predominant longitudinal axis PA of the tubular elements 12 over at least a portion of the lengths of the tubular elements 12. For the fins 13, such waviness 131 runs along the predominant plane P of the fins 13 over at least a portion of the surface areas of the fins 13.

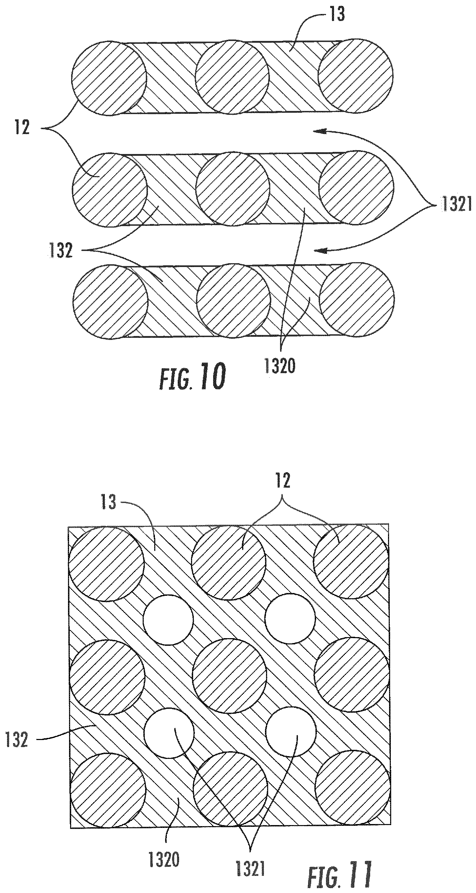

As shown in FIGS. 10 and 11, the fins 13 may be provided as intermittent fins 132. Such intermittent fins 132 would have fin portions 1320 interleaved with fin openings 1321 in either or both the direction of flow of the second fluid or transverse to the direction of flow of the second fluid. The fin openings 1321 can be polygonal (see FIG. 10) or circular or annular (see FIG. 11). In any case, the fin openings 1321 permit some degree of mixing of the second fluid from one individual pathway to an adjacent individual pathway and reduce an overall weight of the fins 13 and the single part 11. In accordance with some embodiments, an individual fin 13 can have multiple types and shapes of fin portions 1320 and fin openings 1321 and each individual fin 13 of the single part 11 can have similarly or differently arranged fin portions 1320 and fin openings 1321 as compared to other fins 13.

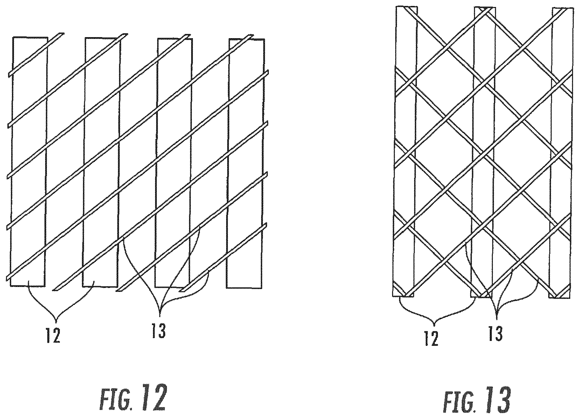

With reference to FIGS. 12-14, it is to be understood that additive manufacturing of the fins 13 can present an issue of how to provide the fins 13 with sufficient support during additive manufacturing processes where the tubular elements 12 can be formed along substantially vertical directions.

Thus, in accordance with embodiments and, as shown in FIGS. 12 and 13, one or more of the fins 13 may be oriented transversely relative to the tubular elements 12. Here, angles formed between the one or more of the fins 13 and the tubular elements 12 can be right angles but may also be acute angles (e.g., 60, 45 or 30 degrees). Such angling of the fins 13 relative to the tubular elements 12 may enhance reliabilities of the additive manufacturing processes in that the "angled" fins 13 can be at least partially self-supporting. Angled fins 13 can be parallel with one another (see FIG. 12) or may be provided in two sets of parallel angled fins 13 so that the fins 13 form a square-lattice or crisscross formation 1301 (see FIG. 13). The increased number of fins 13 in the crisscross formation 1301 can provide for structural stability and increased surface area for heat transfer (the second flow paths 130 are defined in and out of the image).

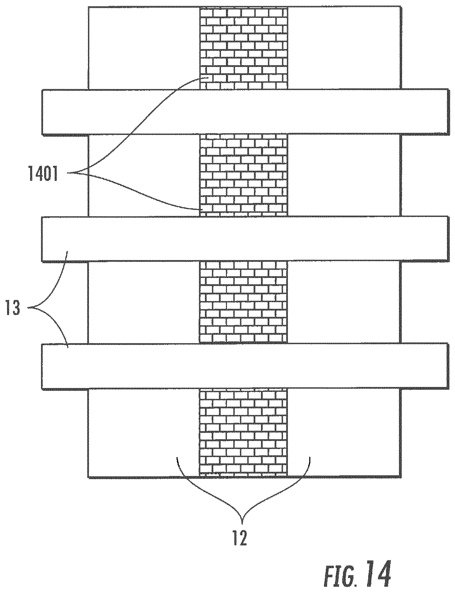

Alternatively and, as shown in FIG. 14, where the tubular elements 12 are substantially vertical and the fins 13 are substantially horizontal, support for the fins 13 may be provided by the formation or disposition of support layers 1401 underneath the fins 13. Such support layers 1401 may be formed of a sacrificial material such that the support layers 1401 can be removed from the single part 11 without damaging the tubular elements 12 or the fins 13 once the additive manufacture of the single part 11 is completed and the tubular elements 12 and the fins 13 are fully formed, cured and/or hardened in place. It is to be understood that the support layers 1401 can be used to support any of the features described herein. As an alternative example, the support layers 1401 can be used to support the tubular elements 12 in cases in which the tubular elements 12 are formed in the horizontal direction and the fins 13 are formed in the vertical direction.

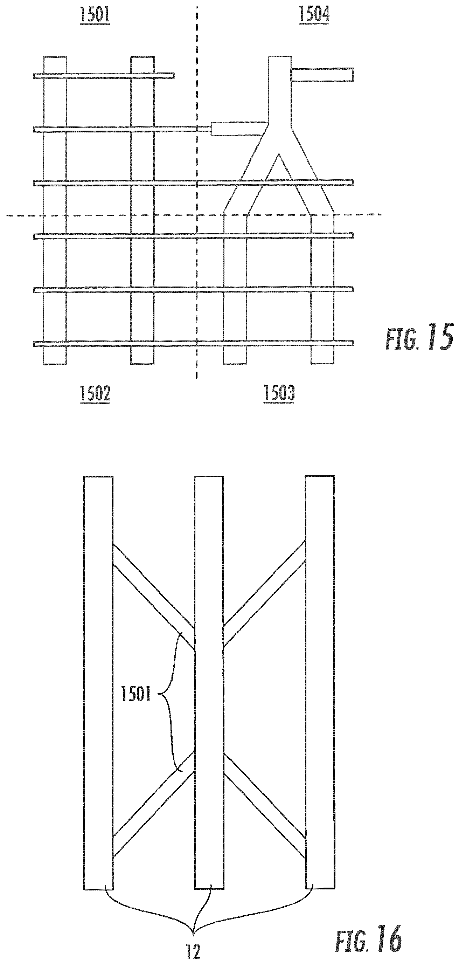

As shown in FIG. 15, the single part 11 may be formed with variable tubular or fin densities as well as variable tubular or fin wall thicknesses at multiple locations within the single part 11. For example, while regions 1501, 1502 and 1503 have standard or similar tubular/fin densities and standard or similar tubular/fin wall thicknesses, region 1504 has a single tubular element 12 with relatively thick walls, which branches off into two tubular elements 12, and fewer but thicker fins 13. Thus, within region 1504, the single part 12 has decreased tubular element and fin densities as well as increased tubular element and fin wall thicknesses. Such variable tubular or fin densities and such variable tubular or fin wall thicknesses can be incorporated into the design of the single part 11 in order to account for and mitigate high stress or high temperature differential regions.

As shown in FIG. 16, the single part 11 may further include redistribution tubular elements 1601. The redistribution tubular elements 1601 extend between two or more of the tubular elements 12 and thus provide for increased surface area for heat transfer as well as fluid communication between the two or more of the tubular elements 12.

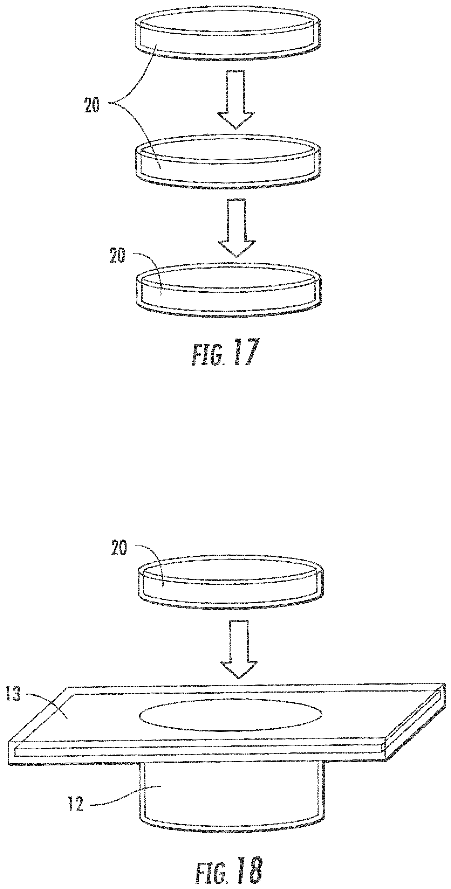

With reference back to FIG. 1 and with additional reference to FIGS. 17 and 18, a method of additive manufacturing of the finned-tube heat exchanger 10 described above in only the single part 11 is provided. The method includes building-up the tubular elements 12 along the longitudinal axes A thereof in layers 20 such that the tubular elements 12 have the tubular widths of less than 2.54 mm (0.1") and are configured to define the first flow paths 120 for the first fluid. During this building-up, the method also includes determining whether predefined heights of built-up tubular elements 12 (the predefined heights can represent the distance between the fins 13 are the ends of the tubular elements 12 or between adjacent fins 13) are reached and eventually identifying that the predefined heights are reached from results of the determining. Once the predefined heights are reached, the method includes building-up fins 13 outwardly from the tubular elements 12 where the building-up of the fins 13 includes arranging the fins 13 to define the second flow paths 130 over and around the tubular elements 12 for a second fluid.

In accordance with embodiments, respective dimensions of the tubular elements 12 and the fins 13 may be defined in a data file that is transmittable across a network between computing resources and a 3D printing device that will be described below. In accordance with further embodiments, the building-up of the tubular elements 12 and the fins 13 may include DMLS or another suitable additive manufacturing process.

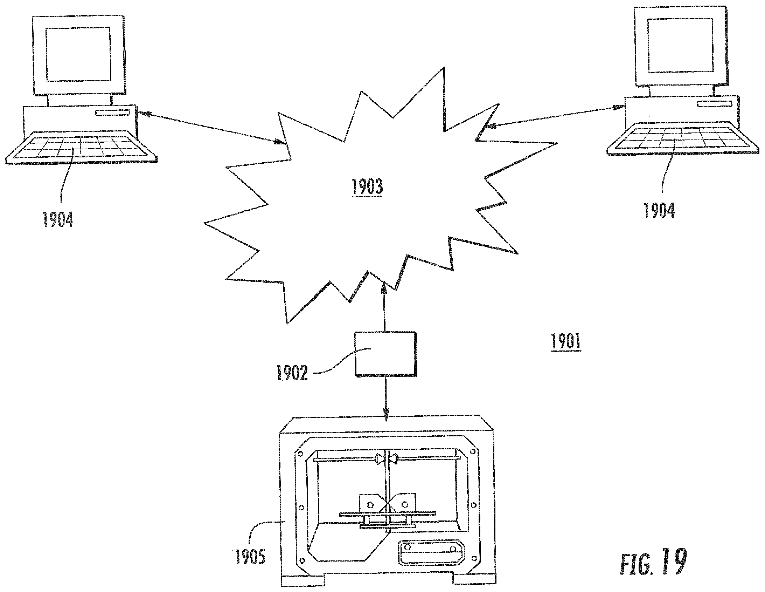

With reference to FIG. 19, a system 1901 is provided. The system 1901 is disposed for manipulating a data file 1902 that is usable in the additive manufacturing of the finned-tube heat exchanger 10 described above in only the single part 11. The system 1901 includes a network 1903, computing resources 1904 that are configured to copy and store the data file 1902 and to securely transmit the data file 1902 along the network 1903 and a 3D printing device 1905. The data file 1902 includes executable instructions that, when they are executed, control the 3D printing device 1905 to execute the method described above with reference to FIGS. 17 and 18.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the invention as defined by the claims. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. An additively manufactured finned-tube heat exchanger, comprising:
only a single part (11), the single part comprising:
one or more tubular elements (12) having tubular widths of less than 2.54 mm (0.1") and being configured to define one or more first flow paths (120) for a first fluid; and
two or more fins (13) through which the one or more tubular elements extend, the two or more fins being arranged to define second flow paths (130) over and around the one or more tubular elements for a second fluid; and wherein
the one or more tubular elements (12) of the single part comprise a plurality of tubular elements, and
the two or more fins (13) of the single part comprise a plurality of fins through which each tubular element of the plurality of tubular elements extends; **characterized in that** the single part further comprises tube-tube connecting fins (14), the tube-tube connecting fins (14) are provided in row-column formations of the tubular elements to extend between complementary exterior surfaces of adjacent-tubular elements.

2. The finned-tube heat exchanger according to claim 1. wherein:
the tubular elements of the plurality of tubular elements are curved, and
the fins of the plurality of the fins are parallel with one another or oriented radially with varying lengths.

## Patentansprüche

1. Additiv gefertigter Rippenrohrwärmetauscher, umfassend:
lediglich ein einzelnes Teil (11), wobei das einzelne Teil Folgendes umfasst:
ein oder mehrere Rohrelemente (12), die Rohrbreiten von weniger als 2,54 mm (0,1") aufweisen und konfiguriert sind, um einen oder mehrere erste Strömungswege (120) für ein erstes Fluid zu definieren; und
zwei oder mehr Rippen (13), durch die sich das eine oder die mehreren Rohrelemente erstrecken, wobei die zwei oder mehr Rippen angeordnet sind, um zweite Strömungswege (130) über und um das eine oder die mehreren Rohrelemente für ein zweites Fluid zu definieren;
und wobei das eine oder die mehreren Rohrelemente (12) des einzelnen Teils eine Vielzahl von Rohrelementen umfassen, und die zwei oder mehr Rippen (13) des einzelnen Teils eine Vielzahl von Rippen umfassen, durch die sich jedes Rohrelement aus der Vielzahl von Rohrelementen erstreckt;
**dadurch gekennzeichnet, dass** das einzelne Teil ferner Rohr-Rohr-Verbindungsrippen (14) umfasst, wobei die Rohr-Rohr-Verbindungsrippen (14) in Reihen-Spalten-Formationen der Rohrelemente bereitgestellt sind, um sich zwischen komplementären Außenflächen von benachbarten Rohrelementen zu erstrecken.

2. Rippenrohrwärmetauscher nach Anspruch 1, wobei:
die Rohrelemente aus der Vielzahl von Rohrelementen gekrümmt sind, und
die Rippen aus der Vielzahl der Rippen parallel zueinander oder radial mit variierenden Längen ausgerichtet sind.

## Revendications

1. Échangeur thermique à tubes à ailettes fabriqué de manière additive, comprenant :
une pièce unique (11), la pièce unique comprenant :
un ou plusieurs éléments tubulaires (12) ayant des largeurs tubulaires inférieures à 2,54 mm (0,1") et étant configurés pour définir un ou plusieurs premiers trajets d'écoulement (120) pour un premier fluide ; et
deux ailettes (13) ou plus à travers lesquelles s'étendent les un ou plusieurs éléments tubulaires, les deux ailettes ou plus étant agencées pour définir des seconds trajets d'écoulement (130) sur et autour des un ou plusieurs éléments tubulaires pour un second fluide et dans lequel
les un ou plusieurs éléments tubulaires (12) de la pièce unique comprennent une pluralité d'éléments tubulaires, et
les deux ailettes (13) ou plus de la pièce unique comprennent une pluralité d'ailettes à travers lesquelles s'étend chaque élément tubulaire de la pluralité d'éléments tubulaires ; **caractérisé en ce que**
la pièce unique comprend en outre des ailettes de raccordement tube-tube (14), les ailettes de raccordement tube-tube (14) étant prévues dans des formations en rangées-colonnes des éléments tubulaires pour s'étendre entre des surfaces extérieures complémentaires d'éléments tubulaires adjacents.

2. Échangeur de chaleur à tubes à ailettes selon la revendication 1, dans lequel :
les éléments tubulaires de la pluralité d'éléments tubulaires sont incurvés et
les ailettes de la pluralité d'ailettes sont parallèles les unes aux autres ou orientées radialement avec des longueurs variables.
